# EUROPEAN PATENT APPLICATION

(11) **EP 2 014 974 A1**
(43) Date of publication of application: **14.01.2009**
(21) Application number: 07112496.0
(22) Date of filing: 13.07.2007
(51) Int. Cl.: F21V 33/00, F21K 7/00, G02B 6/00

(54) **Lighting device, and electric household appliance equipped with such a device**

(71) Applicant: Electrolux Home Products Corporation N.V., 1930 Zaventem (BE)
(72) Inventor: Sacconi, Massimo, 50133 Firenze (IT); Barabesi, Silvano, 50125 Firenze (IT)
(74) Representative: Jorio, Paolo

(57) **Abstract**

An electric household appliance (2) having a box casing (3) provided with an inner compartment (4), and a lighting device (1) located inside this compartment (4); the lighting device (1) comprising a flat body (6) of given thickness and of transparent and/or semitransparent material, and at least one light-emitting diode (7) optically coupled to the flat body (6) to project the emitted light inside of the flat body (6) sideways of the latter, so as that the flat body (6) acts as a light guide; the flat body (6) having a first face (6a) and a second face (6b) opposite one to the other, and being designed so that the light produced by the at least one diode (7) issues from the first face (6a); the surface of the second face (6b) of the flat body (6) having a Fresnel type relief pattern in order to reflect the light traveling inside the flat body (6) outwards of the flat body (6) through the first face (6a) of the flat body (6).

## Description

The present invention relates to a lighting device.

More specifically, the present invention relates to a lighting device for indoors and outdoors, which is also particularly advantageous for lighting the inside of certain types of electric household appliances, such as home refrigerators.

In particular, the present invention is particularly suitable for home refrigerator for storing bottles of wine (wine cellar), to which application the following description refers purely by way of example. However it will be most readily appreciated that the lighting device according to the present invention can be integrated in any kind of refrigerator.

As is known, some home refrigerators are specially designed for long-term storage of a predetermined number of bottles of wine in a horizontal position and in the best environmental conditions for the wine to mature correctly.

More specifically, refrigerators of this sort normally comprise a normally parallelepiped-shaped outer box casing with two separate, independent, thermally insulated inner compartments, each of which is closed hermetically by a door having a central portion made of transparent material; and a heat-pump cooling circuit designed to regulate the temperature inside the two compartments independently of each other.

More specifically, one of the two temperature-controlled compartments is normally used for storing bottles of white wine, and is maintained at a constant temperature preferably, though not necessarily, ranging between 3°C and 10°C, while the other temperature-controlled compartment is used for storing bottles of red wine, and is maintained at a constant temperature preferably, though not necessarily, ranging between 12°C and 20°C.

The heat-pump cooling circuit of refrigerators of this type is therefore designed to keep the first compartment at a reference temperature ranging between 3°C and 10°C, and the second compartment at a reference temperature ranging between 12°C and 20°C.

Inside each temperature-controlled compartment, refrigerators for storing bottles of wine also comprise a rack for a number of superimposed rows of horizontal bottles; and a system of lamps for lighting the inside of the compartment on command.

In refrigerators, location of the lamps inside the compartment has always posed serious problems, by having to meet two conflicting requirements: optimum lighting of all the bottles (or any kind of food items in case of conventional refrigerator) stored in the compartment, and minimum heat transfer inside the compartment, to avoid overloading the cooling circuit. The lamps, in fact, are left on, when the door is closed, even for prolonged periods of time, to use the refrigerator as a showcase for displaying the bottles.

Unfortunately, existing lighting solutions for compartments of refrigerators of this sort have not been very successful. According to users, in fact, when the compartment is full, the bottles or food items at the centre of the compartment are poorly illuminated, on account of the shadows cast by the surrounding bottles or food items closer to the light source.

Up to now, this drawback has only been solved superficially, by increasing both the number of incandescent lamps and the power of the cooling circuit, with all the additional drawbacks this entails.

It is an object of the present invention to provide a home refrigerator for storing bottles of wine and similar, designed to eliminate the aforementioned drawbacks.

According to the present invention, there is provided an electric household appliance as claimed in Claim 1 and preferably, though not necessarily, in any one of the Claims depending directly or indirectly on Claim 1.

According to the present invention, there is also provided a lighting device as claimed in Claim 15 and preferably, though not necessarily, in any one of the Claims depending directly or indirectly on Claim 15.

A non-limiting embodiment of the present invention will be described by way of example with reference to the accompanying drawings, in which:
Figure 1 shows a partly exploded view in perspective, with parts in section and parts removed for clarity, of an enclosure lighting device in accordance with the teachings of the present invention;
Figure 2 shows a section of the Figure 1 lighting device;
Figure 3 shows a section of a variation of the Figure 1 lighting device;
Figure 4 shows a view in perspective, with parts in section and parts removed for clarity, of the top of a home refrigerator in accordance with the teachings of the present invention.

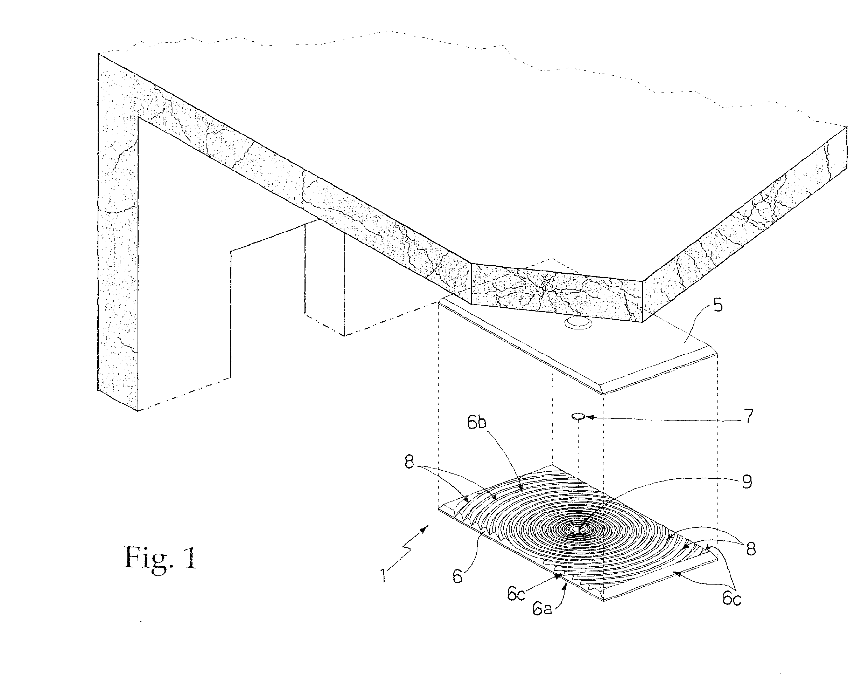

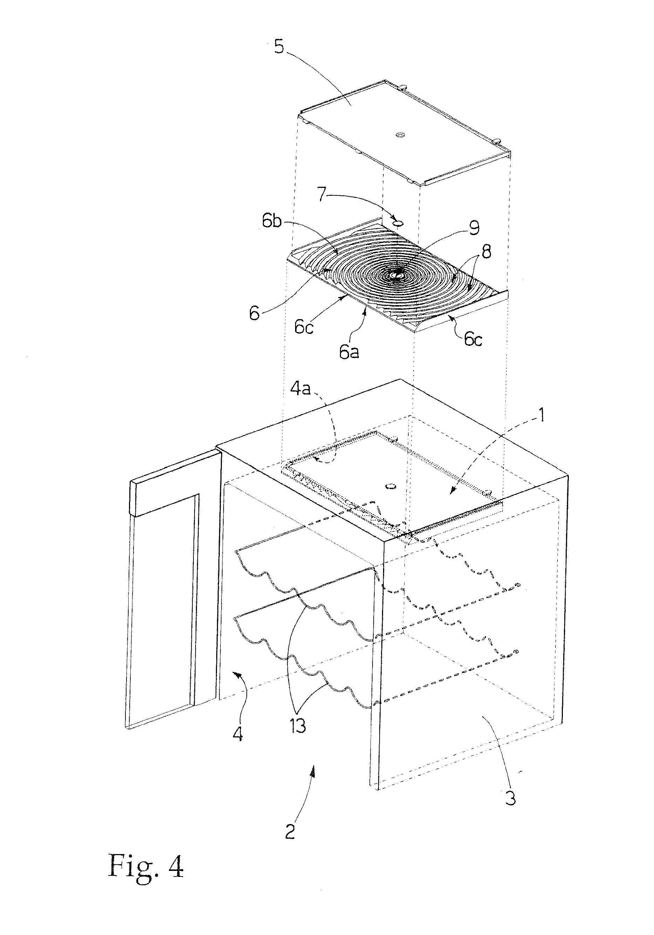

With reference to Figures 1 and 4, number 1 indicates as a whole a lighting device for indoors and outdoors, which may also be used to advantage for lighting the inside of a refrigerator, oven, dishwasher, or any other electric household appliance 2 comprising an outer box casing 3 having an inner compartment 4 accessible from the outside and which, when needed, must be illuminated uniformly, even for prolonged periods of time.

More specifically, with reference to Figure 4, lighting device 1 may be integrated in a home refrigerator 2 for storing bottles of wine, and which, in the example shown, comprises two independent, temperature-controlled compartments, each of which is maintained at a predetermined constant reference temperature preferably, though not necessarily, differing from that of the other compartment.

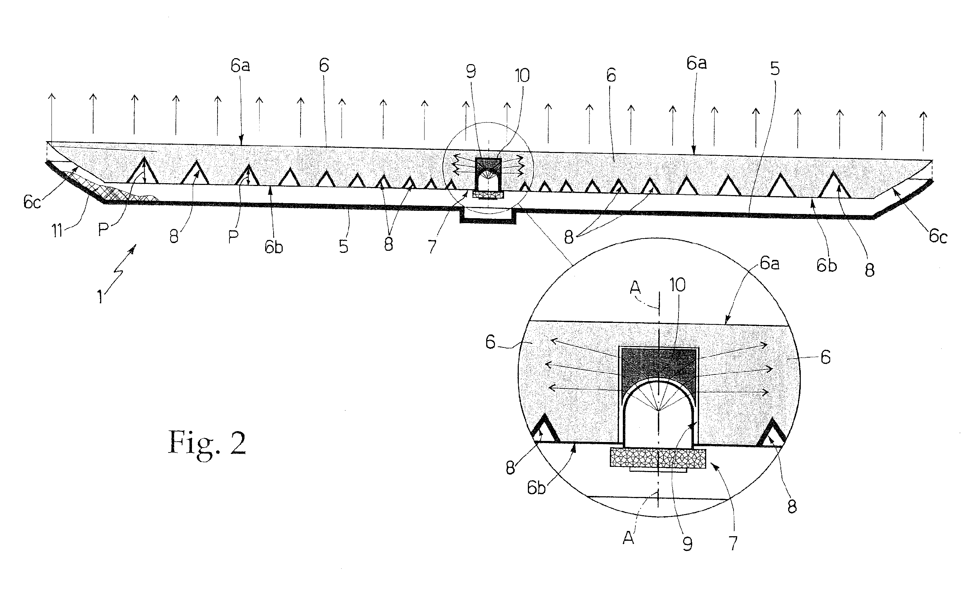

With reference to Figures 1 and 2, lighting device 1 substantially comprises supporting means 5 adapted to be fixed to the ceiling or wall or floor of a generic enclosure, and a substantially flat body 6 of transparent and/or semitransparent material (i.e. at least partially transparent), which is associated to supporting means 5 so that a first or "visible" face of flat body 6 substantially faces the enclosure to be illuminated, whereas a second face of flat body 6 is located adjacent to and faces supporting means 5.

More specifically, lighting device 1 substantially comprises a preferably, though not necessarily, parallelepiped-shaped, rigid container 5 designed to be fixed to the ceiling or wall or floor of a generic enclosure, with the opening of container 5 preferably, though not necessarily, facing the floor; and a flat sheet 6 of given thickness and of transparent and/or semitransparent material, which is substantially complementary in shape to that of container 5, and is housed inside container 5 so that the front or "visible" face of flat sheet 6 - hereinafter indicated 6a - is substantially aligned with the peripheral edge of the opening of container 5, and the rear or inner face of flat sheet 6 - hereinafter indicated 6b - is located adjacent to the bottom of container 5.

In other words, front face 6a and rear face 6b of flat sheet 6 are opposite one to the other, and front face 6a of flat sheet 6 directly faces the floor or any wall of the enclosure for lighting.

Lighting device 1 also comprises one or more light-emitting diodes 7 - hereinafter abbreviated LEDs - optically coupled to the body of sheet 6 to project the emitted light directly into the body of sheet 6 sideways of the latter, so as to cause the emitted light to travel inside the body of sheet 6 (i.e. along the inside of flat sheet 6) which acts as a light guide. This light would remain trapped inside the body of sheet 6, which defines a light guide path delimited by and substantially parallel to front face 6a and to rear face 6b, by virtue of the same physical principles governing the propagation of light inside optical-fibre cables, if not for the fact that flat sheet 6 is specially designed so that the light exits gradually through the surface of front face 6a. LEDs 7 are obviously powered by a known electric energy source not shown.

More specifically, as shown in Figures 1 and 2, rear face 6b of flat sheet 6 has a number of substantially triangular-section grooves 8, which impart to the surface of rear face 6b a serrated profile similar to that of a Fresnel lens, so as to divert the light trapped inside flat sheet 6 outwards; and LED/s 7 is/are housed inside at least one dead or through seat 9 formed preferably more or less in the centre of rear face 6b.

In practice, the light traveling along the inside of the body of sheet 6 (along the light guide path) impinge on the surfaces delimiting grooves 8 on rear face 6b, and such surfaces reflect or divert the incident light outwards of the body of sheet 6 through front face 6a.

In the example shown, flat sheet 6 is preferably, though not necessarily, made of polymethyl methacrylate (commonly known as Plexiglas or PMMA) or similar transparent or semitransparent material (e.g. glass, polyester, or polycarbonate), and comprises, on rear face 6b, a number of substantially triangular-section, concentric annular grooves 8 surrounding and substantially coaxial with seat 9, which is in the form of a circular-section dead hole 9 with its axis of symmetry locally perpendicular to the plane of flat sheet 6.

In the example shown, concentric annular grooves 8 have a maximum depth p, which increases alongside an increase in the distance from seat 9 housing LEDs 7. In other words maximum depth p of annular grooves 8 increases from the centre of the rear face 6b towards the periphery.

Moreover, the surface of flat sheet 6 defining the peripheral edge 6c of the sheet is substantially in the form of a funnel or hopper, flares towards front face 6a to deflect onto front face 6a the light travelling along the body of sheet 6 up to peripheral edge 6c of the sheet.

In other words, peripheral edge 6c of flat sheet 6 is shaped so that the light rays travelling along the body of sheet 6 impinge on the surface of the sheet defining peripheral edge 6c at an incidence angle which is locally greater than the limit angle, so as to reflect the ray onto front face 6a.

In addition, in the example shown, the surface of flat sheet 6 inside each annular groove 8 is made rougher than the rest of flat sheet 6, so as to increase the amount of light diverted outwards of flat sheet 6 through front face 6a.

The light may also be made to issue gradually through front face 6a of flat sheet 6 by screen-printing or painting the surface of front face 6a to locally increase the surface roughness of flat sheet 6.

As regards LEDs 7, lighting device 1 in the example shown comprises one high-efficiency LED 7 housed inside seat 9, and at least one lens 10 arranged inside seat 9 to divert the light emitted by LED 7, so as to cause the diverted light to enter the body 6 and travel inside the latter. More specifically, in the example shown high-efficiency LED 7 is housed inside seat 9 so that the optical axis A of the light cone produced by the LED is substantially perpendicular to the plane on which the sheet 6 extends, and lens 10 is designed to divert the light rays along a directrix locally substantially parallel to the plane on which the sheet 6 extends, so that the light emitted by LED 7 enters the body of sheet 6 through the side or thickness of sheet 6.

Lens 10 may, obviously, be replaced by or combined with a prism to form a more efficient optical device arranged inside seat 9 so as to direct the emitted light towards the body side of sheet 6, almost perpendicularly to the reference lying plane of sheet 6. Preferably lens 10 is made in one piece with flat sheet 6.

With reference to Figures 1 and 2, lighting device 1 preferably, though not necessarily, also comprises an opaque cover film or layer 11, possibly reflective, which is placed on the bottom of container 5, so as to reflect/diffuse back onto flat sheet 6, and hence onto front face 6a, any light issuing accidentally from rear face 6b of flat sheet 6. Obviously the bottom of container 5 itself can reflect/diffuse back onto flat sheet 6, and hence onto front face 6a, any light issuing accidentally from rear face 6b of flat sheet 6.

Preferably, though not necessarily, opaque film or layer 11 extends over the bottom of container 5 to cover substantially the whole surface of rear face 6b.

In the example shown, opaque film or layer 11 is defined by a coat 11 of preferably, though not necessary, white opaque paint covering the whole inner surface of container 5 directly facing rear face 6b of flat sheet 6.

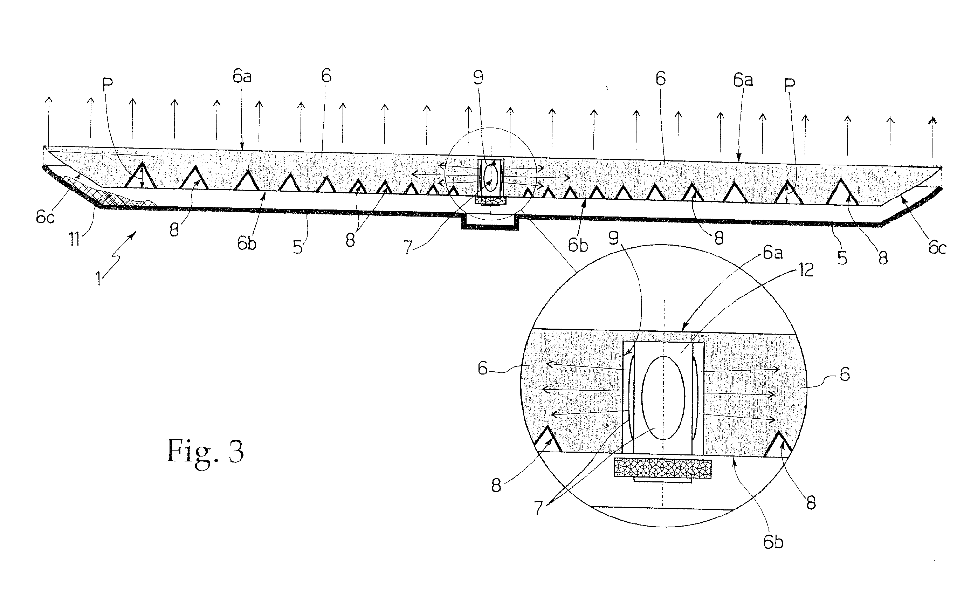

With reference to Figure 3, in an alternative embodiment, lighting device 1 comprises a number of LEDs 7 arranged angularly inside said seat (9) in said first face (6b), so as to cause the light emitted by the individual diode (7) to directly enter the body (6) and travel inside the latter.
More specifically, in the example shown, LEDs 7 are arranged angularly on the lateral surface of a cylindrical supporting hub 12 inserted inside seat 9, so that the individual LEDs 7 directly face the side of flat sheet 6. In this case, the optical axis of the light cone produced by each LED 7 is substantially parallel to the plane on which the sheet 6 extends, and the light emitted by LEDs 7 enters the body of sheet 6 directly through the body side or thickness of flat sheet 6.

With particular reference to Figure 4, home refrigerator 2 for storing bottles of wine comprises a rigid, self-supporting, substantially parallelepiped-shaped box casing 3 having two temperature-controlled inner compartments located one over the other, and each of which is lined with thermally insulating material, and communicates with the outside through a respective access opening formed in the vertical front wall of box casing 2.

The bottom compartment (not shown) is used for storing bottles of red wine, and is maintained at a reference temperature preferably, though not necessarily, ranging between 12°C and 20°C; and the top compartment, indicated by number 4, is used for storing bottles of white wine, and is maintained at a reference temperature preferably, though not necessarily, ranging between 3°C and 10°C.

Refrigerator 2 comprises two doors hinged, one over the other, to the vertical front wall of box casing 3 to rotate - both about a preferably, though not necessarily, common vertical axis - to and from a closed position, in which each door rests against the vertical front wall of box casing 3 to close the access opening of a respective temperature-controlled compartment and seal the compartment off from the outside environment.

With reference to Figure 4, inside each temperature-controlled compartment, refrigerator 2 also comprises at least one rack 13 for a number of superimposed rows of substantially horizontal bottles; and at least one lighting device 1 for lighting the inside of compartment 4 on command.

Like any other refrigerator, refrigerator 2 comprises a heat-pump cooling circuit (not shown), which transfers heat between the outside environment and either one of the temperature-controlled compartments, using the changes in state of a refrigerant subjected to a closed thermodynamic cycle, and which is designed to keep the contents of each temperature-controlled compartment at a respective predetermined reference temperature possibly user-selectable from a given temperature range.

Box casing 3, the doors, rack 13, and the heat-pump cooling circuit are all parts commonly used in the industry, and therefore not described in detail.

As regards lighting device 1, on the other hand, box casing 3 of refrigerator 2 comprises, inside temperature-controlled compartment 4, a seat 4a sized to house lighting device 1 with front face 6a of flat sheet 6 facing inwards of compartment 4; device 1 is housed inside seat 4a; and supporting means 5 are substantially in the form of a tray 5 covering rear face 6b of flat sheet 6.

Operation of refrigerator 2 will be clear from the foregoing description, with no further explanation required.

As regards lighting device 1, on the other hand, the light produced by LED/s 7 housed inside seat 9 enters the body of sheet 6 through the side of flat sheet 6; travels inside the body of sheet 6 through the light guide path between the front and rear faces 6a and 6b; and exits gradually and uniformly from the surface of front face 6a to produce a light beam of substantially uniform intensity along the whole front face 6a of flat sheet 6.

Lighting device 1 has numerous advantages. By virtue of its design, lighting device 1 produces a highly homogeneous, uniform light beam, which propagates inside compartment 4 of appliance/refrigerator 2 without transmitting any heat inside the compartment, and which is not dimmed by any small obstacles in front of lighting device 1.

The electric power dissipated by a LED in the form of heat, in fact, is much lower than that of an incandescent lamp of equal capacity, and one LED is sufficient to illuminate an entire wall of the refrigerator compartment, by appropriately designing flat sheet 6.

Moreover, the total thickness of lighting device 1 is extremely small (the thickness of flat sheet 6, in fact, preferably, though not necessarily, ranges between 0.5 and 3 centimetres), so it can be fitted to the bottom, the ceiling, and/or any other side of compartment 4 of appliance/refrigerator 2.

Clearly, changes may be made to electric household appliance 2 as described herein without, however, departing from the scope of the present invention.

For example, supporting means 5, i.e. container 5, may be incorporated directly inside box casing 3. More specifically, container 5 may be defined by the portion of box casing 3 in which seat 4a is formed, and flat sheet 6 may be fixed directly inside seat 4a, with front face 6a facing compartment 4, and with LED/s 7 housed inside seat 9.

In which case, front face 6a of flat sheet 6 is substantially aligned with the peripheral edge of the opening of seat 4a, and rear face 6b is located adjacent to the bottom of seat 4a in box casing 3.

In one variation, grooves 8 may be elliptical or straight, and may possibly intersect.

As stated, electric household appliance 2 may comprise a dishwasher, a washing machine, an oven, a laundry drier, or a suction hood for lighting a hob underneath; and lighting device 1 may, obviously, be located anywhere inside compartment 4.

Although the body 6 is preferably flat, it can have any thickness allowing the light to be reflected from the rear face 6b to the front face 6a and to be issued thereform. Moreover, the body 6 can be substantially planar or curved

## Claims

1. An electric household appliance (2) comprising a box casing (3) having an inner compartment (4), and at least one lighting device (1) located inside said compartment (4); said lighting device (1) comprising a body (6) of transparent and/or semitransparent material, and at least one light-emitting diode (7) optically coupled to said body (6) to project the emitted light inside of said body (6) sideways of the latter, so as to cause the emitted light to travel inside the body (6) which acts as a light guide; the body (6) having a first face (6a) and a second face (6b) opposite one to the other, and being designed so that the light produced by said at least one diode (7) issues from said first face (6a); said electric household appliance (2) being **characterized in that** the surface of said second face (6b) has a Fresnel type lens relief pattern in order to reflect the light traveling inside the body (6) outwards of said body (6) through the first face (6a) of said body (6).

2. An electric household appliance as claimed in Claim 1, **characterized in that** the second face (6b) of said body (6) comprises a number of grooves (8) imparting to the surface of said second face (6b) a serrated profile similar to that of a Fresnel lens.

3. An electric household appliance as claimed in Claim 1 or 2, **characterized in that** at least one seat (9) is formed in the second face (6b) of said body (6), and said at least one diode (7) is housed inside said seat (9).

4. An electric household appliance as claimed in Claim 3, **characterized in that** said seat (9) is located substantially at the centre of the second face (6b) of said body (6).

5. An electric household appliance as claimed in any one of the foregoing Claims, **characterized in that** said grooves (8) are concentric annular grooves (8).

6. An electric household appliance as claimed in Claims 4 and 5, **characterized in that** said seat (9) is located substantially at the centre of said concentric annular grooves (8).

7. An electric household appliance as claimed in any one of Claims 2 to 6, **characterized in that** said grooves (8) have a substantially triangular cross section.

8. An electric household appliance as claimed in Claims 6 and 7, **characterized in that** the maximum depth (p) of said concentric annular grooves (8) increases alongside an increase in the distance from the seat (9) housing said at least one diode (7).

9. An electric household appliance as claimed in any one of Claims 3 to 8, **characterized in that** said lighting device (1) comprises at least one optical device (10) arranged inside seat (9) to divert the light emitted by said diode (7), so as to cause the diverted light to enter the body (6) and travel inside the latter.

10. An electric household appliance as claimed in Claim 9, **characterized in that** said optical device (10) is made in one piece with said body (6).

11. An electric household appliance as claimed in any one of Claims 3 to 8, **characterized in that** said lighting device (1) comprises a number of light-emitting diodes (7) arranged angularly inside said seat (9), so as to cause the light emitted by the individual diode (7) to directly enter the body (6) and travel inside the latter.

12. An electric household appliance as claimed in any one of Claims 2 to 11, **characterized in that** the surface of the body (6) inside each groove (8) is rougher than the rest of the surface of said body (6).

13. An electric household appliance as claimed in any one of the foregoing Claims, **characterized in that** said body (6) is a flat sheet (6) of polymethyl methacrylate or similar plastic material.

14. An electric household appliance as claimed in any one of the foregoing Claims, **characterized in that** said lighting device (1) also comprises covering means (5, 11) designed to at least partially cover the second face (6b) of said body (6), so as to reflect/diffuse the light back onto said body (6), and hence towards the first face (6a) of said body (6).

15. A lighting device (1) for indoors and outdoors **characterized by** comprising a body (6) of transparent and/or semitransparent material, supporting means (5) adapted to be fixed to the ceiling or wall or floor for supporting said body (6), and at least one light-emitting diode (7) optically coupled to said body (6) to project the emitted light inside of said body (6) sideways of the latter, so as to cause the emitted light to travel inside the body (6) which acts as a light guide; the body (6) having a first face (6a) and a second face (6b) opposite one to the other, and being designed so that the light produced by said at least one diode (7) issues from said first face (6a); said second face (6b) having a Fresnel type lens relief pattern in order to reflect the light traveling inside the body (6) outwards of said body (6) through the first face (6a) of said body (6).

16. A lighting device as claimed in Claim 15, **characterized in that** the second face (6b) of said body (6) comprises a number of grooves (8) imparting to the surface of said second face (6b) a serrated profile similar to that of a Fresnel lens.

17. A lighting device as claimed in Claim 15 or 16, **characterized in that** at least one seat (9) is formed in the second face (6b) of said body (6), and said at least one diode (7) is housed inside said seat (9).

18. A lighting device as claimed in Claim 17, **characterized in that** said seat (9) is located substantially at the centre of the second face (6b) of said body (6).

19. A lighting device as claimed in any one of Claims 15 to 18, **characterized in that** said grooves (8) are concentric annular grooves (8).

20. A lighting device as claimed in Claims 18 and 19, **characterized in that** said seat (9) is located substantially at the centre of said concentric annular grooves (8).

21. A lighting device as claimed in any one of Claims 16 to 20, **characterized in that** said grooves (8) have a substantially triangular cross section.

22. A lighting device as claimed in Claims 20 and 21, **characterized in that** the maximum depth (p) of said concentric annular grooves (8) increases alongside an increase in the distance from the seat (9) housing said at least one diode (7).

23. A lighting device as claimed in any one of Claims 17 to 22, **characterized by** comprising at least one optical device (10) arranged inside seat (9) to divert the light emitted by said diode (7), so as to cause the diverted light to enter the body (6) and travel inside the latter.

24. A lighting device as claimed in Claim 23, **characterized in that** said optical device (10) is made in one piece with said body (6).

25. A lighting device as claimed in any one of Claims 17 to 22, **characterized by** comprising a number of light-emitting diodes (7) arranged angularly inside said seat (9), so as to cause the light emitted by the individual diode (7) to directly enter the body (6) and travel inside the latter.

26. A lighting device as claimed in any one of Claims 16 to 25, **characterized in that** the surface of the body (6) inside each groove (8) is rougher than the rest of the surface of said body (6).

27. A lighting device as claimed in any one of Claims 15 to 26, **characterized in that** said body (6) is a sheet (6) of polymethyl methacrylate or similar plastic material.

28. A lighting device as claimed in any one of Claims 15 to 27, **characterized by** also comprising covering means (5, 11) designed to at least partially cover the second face (6b) of said body (6), so as to reflect/diffuse the light back onto said body (6), and hence towards the first face (6a) of said body (6).

29. A lighting device as claimed in Claim 28, **characterized in that** said covering means (5, 11) are said supporting means (5).
